Europäisches Patentamt

European Patent Office

Office européen des brevets

(11) Numéro de publication : **0 290 571 B1**

(12) # FASCICULE DE BREVET EUROPEEN

(45) Date de publication du fascicule du brevet :
29.07.92 Bulletin 92/31

(51) Int. Cl.⁵ : **C04B 28/14,** C04B 40/02, E04B 2/52, C04B 14/06

(21) Numéro de dépôt : **87907968.9**

(22) Date de dépôt : **26.11.87**

(86) Numéro de dépôt international :
**PCT/FR87/00472**

(87) Numéro de publication internationale :
**WO 88/03916 02.06.88 Gazette 88/12**

(54) **PROCEDE DE FABRICATION D'UN ELEMENT DE CONSTRUCTION A BASE DE LIANT HYDRAULIQUE, ELEMENT AINSI OBTENU ET PROCEDE DE CONSTRUCTION A PARTIR DE CES ELEMENTS.**

(30) Priorité : **27.11.86 FR 8616577**

(43) Date de publication de la demande :
**17.11.88 Bulletin 88/46**

(45) Mention de la délivrance du brevet :
**29.07.92 Bulletin 92/31**

(84) Etats contractants désignés :
**AT BE CH DE FR GB IT LI LU NL SE**

(56) Documents cités :
**BE-A- 505 518
CH-A- 306 575
DE-A- 1 903 347
DE-A- 2 032 261
DE-A- 2 805 523
DE-C- 385 454**

(56) Documents cités :
**FR-A- 615 791
FR-A- 915 121
FR-A- 2 311 638
GB-A- 2 024 887
US-A-26 961 02**

(73) Titulaire : **BROUARD, Jean Charles Louis Eugène
Les Bureaux
F-45170 Saint-Lyé-la-Forêt (FR)**

(72) Inventeur : **BROUARD, Jean Charles Louis Eugène
Les Bureaux
F-45170 Saint-Lyé-la-Forêt (FR)**

(74) Mandataire : **Ramey, Daniel et al
Cabinet Ores 6 Avenue de Messine
F-75008 Paris (FR)**

Jouve, 18, rue Saint-Denis, 75001 PARIS

# Description

L'invention concerne un procédé de fabrication d'un élément de construction à base d'un liant hydraulique, en particulier de plâtre, les éléments obtenus par exécution de ce procédé, ainsi qu'un procédé de construction à partir de ces éléments.

On connaît actuellement des éléments préfabriqués de construction, qui sont réalisés en plâtre et qui sont en général utilisés pour faire des doublages de murs et des cloisons légères. L'inconvénient de ces éléments est leur faible résistence mécanique.

On a déjà tenté de mélanger une charge inerte, par exemple du sable ou des fibres au plâtre pour augmenter la résistance de ces éléments, sans toutefois pouvoir l'augmenter suffisamment pour que l'élément soit utilisable comme élément de mur porteur.

Par ailleurs, les éléments à base de plâtre réalisés par les procédés connus de fabrication ont un temps de séchage important avant de pouvoir être manipulés.

L'invention a notamment pour but de pallier ces inconvénients, en proposant un élément à base de plâtre qui ait une résistance mécanique équivalente à celle d'un petit béton, et une dureté équivalente à celle de la pierre.

L'invention a également pour but de proposer un élément de construction à base de plâtre, qui puisse être manipulé et utilisé dès la fin de sa fabrication, sans subir un séchage préalable.

L'invention a encore pour but un élément de construction à base de plâtre, qui puisse être réalisé à partir d'un plâtre de type quelconque, y compris les plâtres bruts ou de qualité tout à fait ordinaire.

L'invention propose donc un procédé de fabrication d'un élément de construction à base de liant hydraulique, en particulier de plâtre, consistant à mélanger à sec du plâtre et une charge granulaire inerte telle que du sable, à humidifier ce mélange en y ajoutant une quantité d'eau sensiblement égale ou légèrement supérieure à la quantité d'eau nécessaire à l'hydratation du plâtre, à placer immédiatement le mélange humide dans un moule et à le comprimer dans le moule, puis à sortir du moule l'élément ainsi obtenu, caractérisé en ce qu'il consiste à comprimer le mélange humide dans le moule pendant une durée suffisante pour que se produisent dans le moule l'hydratation sensiblement complète du plâtre et une densification du réseau cristallin résultant de cette hydratation.

Selon une autre caractéristique du procédé selon l'invention, la quantité d'eau ajoutée au mélange plâtre-charge granulaire est suffisante pour obtenir la compacité maximale de ce mélange pour une énergie de compression donnée.

Ce procédé de fabrication permet d'utiliser, d'une part, du plâtre de qualité quelconque, ayant une granulométrie quelconque, une vitesse de prise quelconque et un taux d'expansion quelconque, bien qu'il soit préférable que ce taux d'expansion soit relativement élevé, et, d'autre part, une charge granulaire telle que du sable éolien, du sable de mer, de la latérite, etc..., ayant une granulométrie appropriée au produit final que l'on désire obtenir.

Du fait que la quantité d'eau ajoutée au mélange de plâtre et de sable ou analogue est faible et correspond sensiblement à la quantité nécessaire à l'hydratation du plâtre, ou bien, en fonction de la teneur du mélange en plâtre, à la quantité d'eau suffisante pour obtenir la compacité maximale du mélange pour une énergie de compression donnée, on obtient un produit final, au démoulage, que l'on peut manipuler et utiliser sans le faire sécher au préalable.

Par ailleurs, comme l'hydratation du plâtre se produit essentiellement lorsque le mélange humide est comprimé dans le moule, l'expansion du mélange qui résulte de l'hydratation du plâtre est contrariée par la compression qui lui est appliquée, ce qui se traduit par une densification importante et des orientations préférentielles du réseau cristallin du plâtre. Cette caractéristique permet d'obtenir un élément de construction dont la résistance à la compression est par exemple de l'ordre de 150 kg/cm$^2$, c'est-à-dire équivalente à celle d'un béton, tandis que sa dureté est équivalente à celle de la pierre de taille.

Selon une autre caractéristique du procédé selon l'invention, on comprime le mélange humide dans le moule dans deux directions opposées.

On obtient ainsi un élément plus homogène, dont la résistance à la compression est sensiblement constante sur toute sa hauteur.

Selon encore une autre caractéristique de ce procédé, le mélange à sec comprend environ de 15 à 40 % en poids de plâtre, la teneur en plâtre pouvant varier en fonction de la résistance souhaitée du produit final et du faisceau granulométrique du sable utilisé.

Selon encore une autre caractéristique de l'invention, le mélange humidifié comprend environ 20 à 25 parties d'eau en poids pour 100 parties en plâtre, la teneur en eau pouvant être supérieure lorsque la teneur en plâtre est faible.

La durée de la compression du mélange humide dans le moule est comprise entre 2 et 4 minutes environ pour une température ambiante de l'ordre de 20 à 40 °C.

Le procédé selon l'invention est applicable à tout autre liant hydraulique (ciment, chaux) auquel on ajoute si nécessaire un agent expansif.

L'invention propose également un élément de construction à base de liant hydraulique en particulier de plâtre, obtenu par exécution du procédé qui vient d'être décrit, et se présentant sous la forme d'un bloc parallélépipédique creux, caractérisé en ce que sa face supérieure comprend des saillies de positionnement et d'alignement longitudinal et transversal, et en ce que sa face inférieure comprend des cavités destinées à recevoir les saillies de la face supérieure d'un élément identique, ainsi que des canaux de passage d'un produit de scellement qui communiquent avec les cavités précitées.

Un tel élément de construction, lorsqu'il est réalisé par le procédé selon l'invention, présente une précision dimensionnelle très élevée, de l'ordre de 0,1 mm. Les saillies de sa face supérieure et les cavités de sa face inférieure permettent de le placer et de le positionner de façon très précise sur une rangée d'éléments déjà construite, sans qu'il soit nécessaire de prévoir des joints entre ces éléments pour compenser leurs tolérances dimensionnelles.

L'élément selon l'invention comprend encore, de préférence, une rainure verticale de coulée d'un produit de scellement, à l'une de ses extrémités, cette rainure débouchant à son extrémité inférieure dans les canaux précités.

L'invention propose encore un procédé de construction à partir des éléments selon l'invention, qui est caractérisé en ce qu'il consiste à placer les éléments bout à bout et les uns sur les autres, en les orientant dans une même direction, les éléments d'une rangée étant décalés d'une demi-longueur par rapport aux éléments d'une rangée adjacente, et, après formation de chaque rangée, à verser dans les rainures verticales des extrémités des éléments un produit de scellement liquide, à base du liant hydraulique constituant les éléments.

Ce produit liquide circule dans les cavités de la face inférieure de l'élément et les remplit partiellement, en assurant la solidarisation de cet élément avec les éléments de la rangée inférieure. Le produit liquide remplit également les rainures verticales des extrémités des éléments, en solidarisant ainsi les éléments placés bout à bout dans une même rangée. Comme les éléments de construction et le produit de scellement sont formés du même liant hydraulique, on obtient une structure d'ensemble très homogène ne présentant pas de lignes ou de zones préferentielles de faiblesse.

L'invention permet en particulier, de fabriquer des éléments de construction à base de plâtre et de les utiliser immédiatement, par mise en oeuvre de moyens simples et peu coûteux, et trouve donc une application particulièrement intéressante dans les pays en voie de développement.

D'autres caractéristiques, détails et avantages de l'invention apparaîtront mieux à la lecture de la description qui va suivre, faite à titre d'exemple en référence aux dessins annexés et dans lesquels :
  – la figure 1 est une vue schématique en perspective d'un élément de construction selon l'invention ;
  – la figure 2 est une vue en coupe longitudinale de cet élément ;
  – la figure 3 est une vue de la face inférieure de cet élément ;
  – la figure 4 est une vue d'une partie d'un mur construit avec les éléments selon l'invention ;
  – la figure 5 est une vue de dessus de cette partie de mur.

Comme indiqué dans ce qui précède, le procédé selon l'invention consiste essentiellement à mélanger, à sec, un liant hydraulique tel que du plâtre et une charge granulaire inerte telle que du sable ou du gravillon, à humidifier ce mélange avec une quantité d'eau minimale prédéterminée, à placer immédiatement ce mélange humide dans un moule et à le comprimer dans le moule pendant que l'hydratation du plâtre se produit, puis à sortir du moule l'élément de construction obtenu et, soit à l'utiliser immédiatement, soit à le stocker, en fonction des besoins.

Le plâtre utilisé est un plâtre de qualité quelconque, voire même un plâtre brut, par exemple un plâtre cuit au soleil à basse température, ayant une granulométrie quelconque, une vitesse de prise quelconque et un taux d'expansion quelconque, mais de préférence élevé.

La charge granulaire utilisée est du sable de qualité indifférente, par exemple du sable éolien, du sable de mer, de la latérite, ayant une granulométrie quelconque inférieure à 15 - 20 mm environ. De préférence, cette granulométrie est choisie inférieure à environ 3 mm, lorsqu'on veut pouvoir scier le produit final.

Le plâtre et la charge granulaire, par exemple de sable, sont mélangés à sec, la teneur en plâtre de ce mélange étant de l'ordre de 15 à 40 % en poids, en fonction de la résistance finale souhaitée de l'élément de construction et du faisceau granulométrique du sable utilisé.

L'opération suivante du procédé consiste à humidifier ce mélange de plâtre et de sable, de façon homogène, avec une quantité d'eau qui est légèrement supérieure à l'optimum proctor, c'est-à-dire à la teneur en eau qui permet une compacité maximale du mélange pour une énergie de compression donnée. Cette quantité d'eau est de préférence égale à l'optimum proctor plus une très faible quantité d'eau de mouillage qui est de l'ordre de 4 à 5 % par exemple de la quantité totale d'eau. L'eau doit en effet être en quantité nécessaire pour permettre l'hydratation du plâtre et en quantité suffisante pour obtenir la compacité maximale du mélange à la première compression.

Pour fixer les idées, on précisera que le mélange humide comprend environ 20 à 25 parties d'eau en poids pour 100 parties de plâtre, lorsque la teneur en plâtre est relativement élevée et que la quantité d'eau utilisée est supérieure à cette teneur, lorsque la teneur en plâtre est faible, afin d'assurer le mouillage du sable utilisé.

A titre de comparaison, la teneur en eau est en général de l'ordre de 80 parties d'eau en poids pour 100 parties de plâtre, dans les procédés courants de préparation d'un plâtre.

Le mélange humide est placé immédiatement dans un moule à la forme de l'élément à obtenir, qui comprend une plaque inférieure et une plaque supérieure mobiles l'une vers l'autre et reliées à des moyens permettant de comprimer pendant une durée suffisante le mélange humide placé dans le moule. Ces moyens peuvent être une presse mécanique, hydraulique, etc... permettant de développer à l'intérieur du moule une pression de l'ordre de 30 à 100 kg par cm² environ.

La durée de la compression est comprise entre 2 à 4 minutes environ à une température ambiante de l'ordre de 20 à 40 °C, et est variable en fonction de cette température ambiante et de la composition du mélange.

Il se produit dans le moule les phénomènes suivants :

Le plâtre commence en fait son expansion dès qu'il est en contact avec l'eau. Pour cette raison, il est important que le mélange humide soit placé dans le moule le plus tôt possible après son humidification. Pour cela, on peut remplir le moule par un convoyeur à tapis, qui transporte un débit prédéterminé de mélange sec de plâtre et de sable, et on humidifie ce mélange pendant sa chute dans le moule, par une pulvérisation d'eau extrêmement fine, sans entraînement d'air, par exemple avec un jet à miroir.

Le mélange humide tombant dans le moule subit la compression précitée dans deux directions opposées, dès que la quantité voulue de mélange a été placée dans le moule. Pendant cette compression, l'expansion du plâtre, résultant de son hydratation, est contrariée par la compression dans le volume fermé du moule. Il en résulte une densification importante et des orientations préférentielles du réseau cristallin du plâtre, les cristaux se formant dans tous les vides qu'ils peuvent occuper. A la fin de la durée précitée, la compression est arrêtée et l'élément moulé est immédiatement sorti du moule.

La compression et la densification résultante du réseau cristallin du plâtre permettent d'obtenir un élément de construction présentant des surfaces extrêmement lisses, une précision dimensionnelle de l'ordre de 0,1 mm, une dureté équivalente à celle de la pierre tendre, et une résistance à la compression qui varie, en fonction de la composition du mélange utilisé, entre 50 et 200 kg par cm².

L'élément éjecté du moule est un produit dur, qui est directement manipulable sans précautions particulières, que l'on peut utiliser immédiatement en construction, et qui est insensible au gel.

Le moule utilisé doit être réalisé en acier résistant, de forte épaisseur et ne comprend pas de pièces nécessitant un graissage.

Le procédé selon l'invention pemet de fabriquer des éléments de construction de formes diverses, par exemple des blocs parallélépipédiques creux du type parpaing, des carreaux plans, des tuiles (avec adjonction au mélange de fibres d'armature, telles que des fibres de laine de verre) etc....

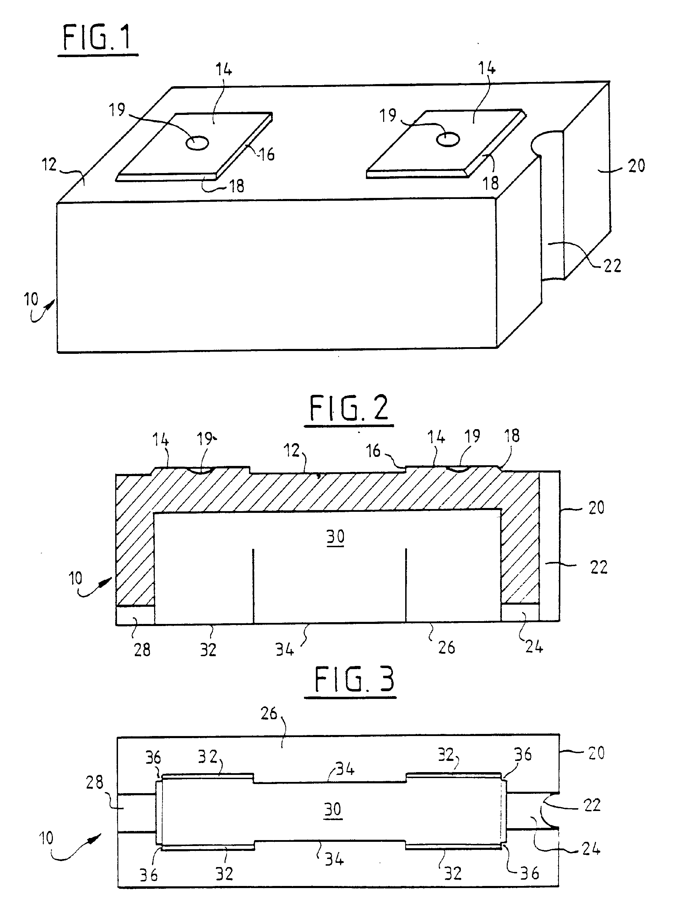

On fera maintenant référence aux figures 1 à 3, qui représentent un élément de construction selon une forme de réalisation préférée de l'invention.

Cet élément, désigné généralement par la référence 10, est de forme parallélépipédique creuse et comprend sur sa face supérieure 12 deux saillies 14 de faible épaisseur, ayant par exemple une forme carrée. Pour faciliter le positionnement et l'auto-alignement des éléments les uns sur les autres, deux des faces latérales 16 des saillies 14 peuvent être verticales et strictement perpendiculaires à la face supérieure 12 de l'élément 10, tandis que les deux autres faces latérales 18 de chaque saillie sont obliques.

La face supérieure des saillies 14 peut comprendre, comme représenté en figures 1 et 2, une empreinte en creux 19 en forme de calotte sphérique, qui permet au moulage d'obtenir avec précision la forme souhaitée des faces latérales 16 et 18 des saillies.

Une des faces d'extrémité longitudinale 20 de l'élément 10 présente une rainure verticale 22 s'étendant sur toute sa hauteur, et dont l'extrémité inférieure débouche dans une rainure longitudinale 24 de la face inférieure de l'élément 10. A l'autre extrémité de la face inférieure 26 de l'élément 10, on retrouve une rainure longitudinale 28, dans l'alignement de la rainure 24.

Les deux rainures d'extrémité 24 et 28 de la face inférieure de l'élément 10 débouchent dans une cavité 30, dont les côtés longitudinaux présentent deux décrochements 32 à leurs extrémités, correspondant à la dimension des côté longitudinaux des saillies 14, ces décrochements étant reliés entre eux, longitudinalement, par deux bords droits 34 en saillie l'un vers l'autre et, transversalement, par des butées 36, de telle sorte que les saillies 14 de la face supérieure 12 d'un élément 10 puissent venir se placer et se positionner exactement dans les logements définis par les côtés 32 et 34 et les butées 36 des bords inférieurs de la cavité 30 d'un autre élément.

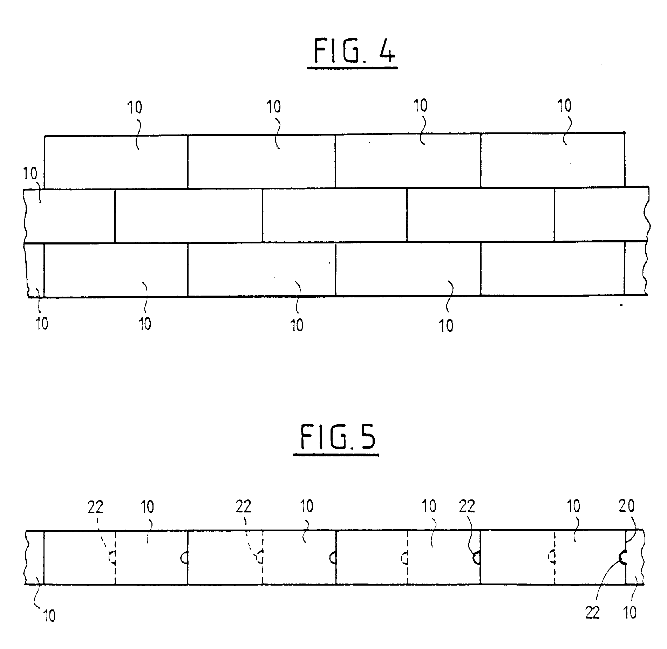

Les éléments selon l'invention sont placés bout à bout et les uns sur les autres de la façon représentée par les figures 4 et 5, pour former un mur droit.

La partie de mur représentée en figure 4 comprend trois rangées d'éléments 10 placés bout à bout, en étant tous orientés dans la même direction, les éléments d'une rangée étant décalés d'une demi-longueur par rapport aux éléments des rangées adjacentes.

Les éléments 10 destinés à constituer une rangée sont posés directement sur les éléments 10 de la rangée inférieure, sans interposition d'un joint. Lorsqu'une rangée est terminée, on verse un produit liquide de scellement, tel qu'un plâtre très liquide, dans les rainures verticales 22 des éxtrémités des éléments de cette rangée. Ce plâtre liquide, versé dans une rainure verticale 22, gagne l'intérieur de la cavité 30 de cet élément par la rainure 24 de sa face inférieure 26 et vient recouvrir les saillies 14 des éléments correspondants de la rangée inférieure. Le plâtre liquide versé dans la rainure verticale 22 passe également par la rainure horizontale 28 de l'élément situé au même niveau et contre laquelle est appliquée la face d'extrémité 20 du premier élément. Après une première passe où l'on remplit les rainures verticales 22 des éléments d'une rangée, on peut effectuer une deuxième passe pour remplir complètement ces rainures, le plâtre versé lors de la première passe ayant rempli partiellement les cavités 30 des éléments.

La liaison obtenue entre les éléments est extrêmement solide car le plâtre de scellement, en faisant sa prise, se lie de façon très intime au plâtre constituant les éléments 10.

Les éléments 10 selon l'invention peuvent bien entendu être montés à angle droit les uns par rapport aux autres, lorsqu'on arrive à un angle de la construction.

Par ailleurs, en fabriquant des éléments 10 ouverts à leurs extrémités longitudinales, on peut former des chaîneaux ou utiliser ces éléments comme coffrages perdus d'une poutre.

Le procédé selon l'invention s'applique à tous les liants hydrauliques (plâtres, ciments, chaux). Si le liant n'a pas un taux d'expansion suffisant pendant son hydratation, on lui ajoute un agent expansif qui agit soit en combinaison avec le liant hydraulique, soit indépendamment de ce dernier, pour réaliser une expansion en présence d'eau pendant le moulage sous pression du mélange, ce qui permet d'obtenir un produit moulé dont les caractéristiques mécaniques sont fortement améliorées.

De tels agents expansifs sont bien connus de l'homme du métier. Pour les ciments, on peut utiliser par exemple le sel de Candelot (sulfo-aluminate de calcium), ou des silicates de calcium. Pour le plâtre, on peut utiliser du gypse, qui est aussi un accélérateur de prise.

**Revendications**

1. Procédé de fabrication d'un élément de construction à base d'un liant hydraulique, tel que du plâtre par exemple, consistant à mélanger à sec du plâtre et une charge granulaire inerte telle que du sable, à humidifier ce mélange avec une quantité d'eau sensiblement égale ou légèrement supérieure à la quantité d'eau nécessaire à l'hydratation du plâtre, à placer immédiatement le mélange humide dans un moule et à le comprimer dans le moule, puis à sortir du moule l'élément ainsi obtenu, caractérisé en ce qu'il consiste à comprimer le mélange humide dans le moule pendant une durée suffisante pour que se produisent dans le moule l'hydratation sensiblement complète du plâtre et une densification du réseau cristallin résultant de cette hydratation.

2. Procédé selon la revendication 1, caractérisé en ce que la quantité d'eau ajoutée au mélange plâtre-charge granulaire est suffisante pour obtenir la compacité maximale de ce mélange pour une énergie de compression donnée.

3. Procédé selon la revendication 1 ou 2, caractérisé en ce qu'il consiste, après démoulage, à utiliser immédiatement l'élément obtenu pour former une construction.

4. Procédé selon l'une des revendications 1 à 3, caractérisé en ce qu'on comprime le mélange humide dans le moule, dans deux directions opposées.

5. Procédé selon l'une des revendications précédentes, caractérisé en ce que le mélange à sec comprend environ de 15 à 40% en poids de plâtre.

6. Procédé selon l'une des revendications précédentes, caractérisé en ce que la granulométrie de la charge inerte est inférieure à 15-20 mm environ.

7. Procédé selon la revendication 6, caractérisé en ce que cette granulométrie est inférieure à 3 mm environ.

8. Procédé selon l'une des revendications précédentes, caractérisé en ce que le mélange humidifié comprend environ 20 à 25 parties d'eau en poids pour 100 parties de plâtre.

9. Procédé selon l'une des revendications précédentes, caractérisé en ce que la durée de la compression dans le moule est comprise entre 2 et 4 minutes pour une température ambiante de l'ordre de 20 à 40°C.

10. Procédé selon l'une des revendications précédentes, caractérisé en ce qu'on remplace le plâtre par un autre liant hydraulique tel que le ciment ou la chaux auquel on ajoute un agent expansif réalisant une expansion dans le mélange en présence d'eau.

11. Element de construction se présentant sous la forme d'un bloc parallélépipédique obtenu par exécution du procédé selon l'une des revendications précédentes, caractérisé en ce que ce bloc est creux et sa face supérieure (12) comprend des saillies (14) de positionnement et d'alignement longitudinal et transversal, sa face inférieure (26) comprenant des cavités (30) destinées à recevoir les saillies (14) de la face supérieure d'un élément identique, ainsi que des canaux (24, 28) de passage d'un produit de scellement, qui communiquent avec les cavités (30) précitées.

12. Elément selon la revendication 11, caractérisé en ce qu'il comprend, à l'une de ses extrémités, une rainure verticale (22) de coulée d'un produit de scellement, qui débouche à son extrémité inférieure dans un canal (24) précité.

13. Procédé de construction à partir des éléments selon l'ensemble des revendications 11 et 12, caractérisé en ce qu'il consiste à placer les éléments (10) bout à bout et les uns sur les autres, en les orientant dans une même direction, les éléments (10) d'une rangée étant décalés d'un demi-longueur par rapport aux élements d'une rangée adjacente et, après avoir formé une rangée, à verser dans les rainures verticales (22) des extrémités des éléments (10) un produit de scellement humide à base du liant hydraulique constituant les éléments.

**Patentansprüche**

1. Verfahren zum Herstellen eines Bauelements auf der Grundlage eines hydraulischen Bindemittels, wie beispielsweise Gips, das folgendes umfaßt: trockenes Vermengen des Gipses und einer inerten granulären Füllung, wie Sand, Befeuchten dieses Gemenges mit einer Wassermenge, die im wesentlichen gleich der zur Hydratation des Gipses notwendigen Wassermenge oder ein wenig größer, als diese ist, unmittelbares Einbringen des feuchten Gemenges in eine Form und Komprimieren desselben in der Form, sodann Herausholen des so erhaltenen Elements aus der Form, dadurch gekennzeichnet, daß dieses das Komprimieren des feuchten Gemenges in der Form während einer Zeitdauer umfaßt, die ausreicht, um die, im wesentlichen vollständige Hydratisierung des Gipses und eine, sich aus dieser Hydratisierung ergebende Verdichtung des Kristallgitters in der Form zu vollziehen.

2. Verfahren nach Anspruch 1, dadurch gekennzeichnet, daß die dem Gemenge von Gips und granulärer Füllung zugefügte Wassermenge ausreicht, um die maximale Kompaktheit dieses Gemenges für eine gegebene Kompressionsenergie zu erhalten.

3. Verfahren nach Anspruch 1 oder Anspruch 2, dadurch gekennzeichnet, daß dieses das unmittelbare Verwenden des erhaltenen Elements nach dem Herausnehmen aus der Form umfaßt, um eine Konstruktion zu bilden.

4. Verfahren nach einem der Ansprüche 1 bis 3, dadurch gekennzeichnet, daß das feuchte Gemenge in der Form in zwei entgegengesetzten Richtungen komprimiert wird.

5. Verfahren nach einem der vorgehenden Ansprüche, dadurch gekennzeichnet, daß das trockene Gemenge ungefähr 15 bis 40 % des Gipses enthält.

6. Verfahren nach einem der vorgehenden Ansprüche, dadurch gekennzeichnet, daß die Körnung der inerten Füllung kleiner als ungefähr 15 - 20 mm ist.

7. Verfahren nach Anspruch 6, dadurch gekennzeichnet, daß diese Körnung kleiner als ungefähr 3 mm ist.

8. Verfahren nach einem der vorgehenden Ansprüche, dadurch gekennzeichnet, daß das angefeuchtete Gemenge ungefähr 20 bis 25 Gewichtsteile Wasser für 100 Teile Gips enthält.

9. Verfahren nach einem der vorgehenden Ansprüche, dadurch gekennzeichnet, daß die Dauer der Kompression in der Form bei einer Umgebungstemperatur in der Größenordnung von 20 bis 40°C zwischen 2 und 4 Minuten liegt.

10. Verfahren nach einem der vorgehenden Ansprüche, dadurch gekennzeichnet, daß der Gips durch ein anderes hydraulisches Bindemittel, wie Zement oder Kalk ersetzt wird, dem ein Expansionsmittel zugefügt wird, welches in dem Gemenge im Beisein von Wasser eine Expansion ausführt.

11. Bauelement, das in Form eines Parallelepipedblocks ausgebildet ist, der durch Durchführen des Verfahrens nach einem der vorangehenden Ansprüche erhalten wird, dadurch gekennzeichnet, daß dieser Block hohl ist und seine obere Seite (12) Vorsprünge (14) zum Einstellen und zum longitudinalen und transversalen Ausrichten aufweist, wobei seine untere Seite (26) folgendes aufweist: Hohlräume (30), die bestimmt sind, die Vorsprünge (14) der oberen Seite eines identischen Elements aufzunehmen sowie mit den Hohlräumen (30) zusammenwirkende Kanäle (24, 28) zum Einführen eines Eingußprodukts.

12. Element nach Anspruch 11, dadurch gekennzeichnet, daß dieses an einem seiner Enden eine vertikale Rille (22) zum Eingießen mit einem Eingußprodukt aufweist, die an ihrem unteren Ende in einen Kanal (24) mündet.

13. Bauverfahren, ausgehend von den Elementen nach dem Satz der Ansprüche 11 und 12, dadurch gekennzeichnet, daß dieses folgendes umfaßt: Aneinander- und Übereinandersetzen von Elementen (10), die in derselben Richtung ausgerichtet sind, wobei die Elemente (10) einer Reihe um eine halbe Länge bezüglich der Elemente einer benachbarten Reihe versetzt sind und das Hineingießen eines feuchten Eingußprodukts auf der Grundlage des, die Elemente bildenden hydraulischen Bindemittels in die vertikalen Rillen (22) an den Enden der Elemente (10), nachdem eine Reihe gebildet wurde.

**Claims**

1. A method of manufacturing a building element based on a hydraulic binder, such as plaster for example, the method consisting in dry mixing plaster and an inert granular fill such as sand, in dampening said mixture by adding a quantity of water thereto which is substantially equal to or slightly greater than the quantity of water necessary for hydrating the plaster, in immediately placing the damp mixture in a mold, and in compressing it in the mold, then in extracting the element obtained in this way from the mold, characterized in that it consists in compressing the damp mixture in the mold for a period of time sufficient for substantially complete hydration of the plaster and densification of the crystal lattice resulting from said hydration to take place in the mold.

2. A method according to claim 1, characterized in that the quantity of water added to the mixture of plaster and granular fill is sufficient for obtaining maximum compactness of said mixture for a given compression energy.

3. A method according to claim 1 or 2, characterized in that after unmolding, it consists in using the element obtained immediately in order to form a building.

4. A method according to any one of claims 1 to 3, characterized in that the damp mixture is compressed in the mold in two opposite directions.

5. A method according to any preceding claim, characterized in that the dry mixture comprises about 15% to about 40% by weight of plaster.

6. A method according to any preceding claim, characterized in that the grain size of the inert fill is less than about 15 mm to about 20 mm.

7. A method according to claim 6, characterized in that said grain size is less than about 3 mm.

8. A method according to any preceding claim, characterized in that the damp mixture comprises about 20 to 25 parts by weight of water per 100 parts of plaster.

9. A method according to any preceding claim, characterized in that the duration of compression within the mold lies in the range 2 minutes to about 4 minutes at an ambient temperature of about 20°C to about 40°C.

10. A method according to any preceding claim, characterized in that the plaster is replaced by another hydraulic binder such as cement or lime, with an expansion agent being added thereto to cause in the mixture to expand in the presence of water.

11. A building element in the form of a rectangular block obtained by performing the method according to any preceding claim, characterized in that the block is hollow and its top face (12) includes projections (14) for longitudinal and transverse alignment and positioning, its bottom face (26) including cavities (30) for receiving the projections (14) of the top face of an identical element, together with channels (24, 28) for passing a sealant, said channels communicating with said cavities (30).

12. An element according to claim 11, characterized in that it includes, at one of its ends, a vertical casting groove (22) for casting a sealant, said groove opening out at its bottom end into one of the above-mentioned channels (24).

13. A building method using elements according to claims 11 and 12 taken together, characterized in that it consists in placing the elements (10) end-to-end and on top of one another, placing all of the elements the same way round, the elements (10) of one course being offset by one half length relative to the elements of an adjacent course; and after a course has been laid, in pouring a liquid sealant into the vertical grooves (22) at the ends of the elements (10), said sealant being based on the hydraulic binder from which the elements are made.

## FIG.1

## FIG.2

## FIG.3

## FIG. 4

10    10    10    10

10

10    10    10    10

## FIG.5

22    10    22    10    10    22    10    20

10    22    10